# EUROPEAN PATENT APPLICATION

(11) **EP 2 458 884 A1**
(43) Date of publication of application: **30.05.2012**
(21) Application number: 10193145.9
(22) Date of filing: 30.11.2010
(51) Int. Cl.: H04N 21/422, H04N 7/167, G06F 21/00, G08C 17/02, H04N 5/44

(54) **Secured remote control for audio/video receiver/decoder**

(71) Applicant: Nagravision S.A., 1033 Cheseaux-sur-Lausanne (CH)
(72) Inventor: Kudelski, André, 1095, Lutry (CH); Nicolas, Christophe, 1162 Saint-Prex (CH)
(74) Representative: Leman Consulting S.A.

(57) **Abstract**

The present invention is related to the field of receiver/decoder for television reception and in particular is focused on the remote control of said receiver/decoder. In order to limit the use of generic remote control it is proposed a system comprising a remote control and a security device, both sharing common key, algorithms or protocol specific to the pair formed by the remote control and the security device, the remote control comprising means to send wirelessly data to a receiver comprising the security device, said remote control being paired with the security device so that each data sent by the remote control toward the receiver is specific to the pair formed by the remote control and the security device.

## Description

### Introduction

The present invention is related to the field of receiver/decoder for television reception and in particular is focused on the remote control of said receiver/decoder.

### Background art

A receiver/decoder or IRD (or Set top box) is a house appliance connected to an input signal for receiving television channels. The input signal can be of different types such as satellite reception, antenna for terrestrial reception, cable or IP connections.

The input signal is then processing by the IRD to tune or filter the channel requested by the user. Connected to the IRD is a television screen that allows the user to take advantage of the television channel.

The IRD can also have recording capabilities (on hard drive) and perform the various tasks related to the conditional access to the content.

For that purpose, the IRD can be connected to a security module in charge of processing the access rights messages, check the access conditions and release the keys to have access to the content.

The IRD can be in the form of a device directly plugged into the television, the input signal being first received and filter (or tuned) by the television and passed to the device process the access conditions and the decryption of the security layer.

The IRD is driven by a remote control to make the selection of the channel, to enter a password (parental control), to activate the EPG, to select the various mode of operations.

The protocol of communication between the IRD and the remote being known, some manufacturers propose compatible remote with enhanced possibilities such as driving a plurality of devices.

### Brief description of the invention

The IRD is not only used in a one way consumption device, but is also used in an interactive device to enter commands for ordering goods, for participating to a survey or a simply to confirm the presence of the user. In this particular case, the document W02009/109583 proposes a mechanism to reward a user for watching advertisements. This document describes the display of a pseudo-random character to ascertain that a real user is setting next to the television rather than a modified remote control connected to a web site that trig the right answer to all connected remotes.

Therefore, the main object of the invention is to have a protection of the communication between the remote and the IRD. Only a given remote control can pass commands to a given IRD.

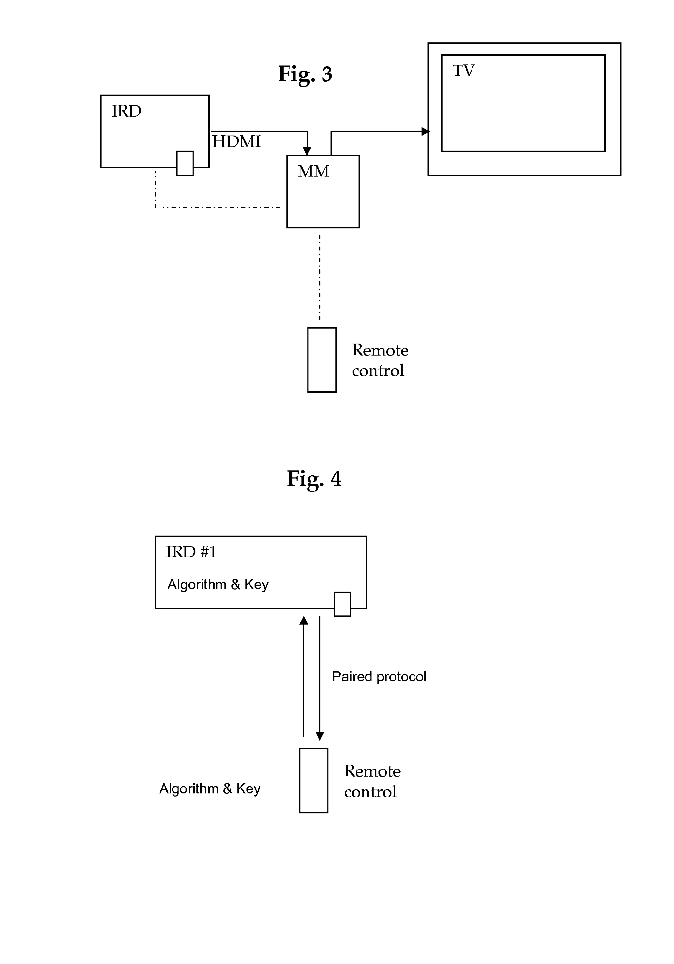

The protection may be granted by one of the following methods:
- Using a pairing protocol to pair the Remote-C with the Device in a way that the Device can only receive command from an authorized Remote-C that has been paired with the Device. (Fig. 4) The pairing may be one to one or a class pairing. This pairing is not equivalent to the standard pairing that is designed to avoid interferences between different remote control (e.g. blue tooth protocol). This means that only authorized equipment, with a authorized algorithm and/or key may be paired)
   o The process of enrolling the remote control is done through setup of the appropriate key and algorithm in the remote control as well as in the Device
   o The setup can be done at the manufacturing process of the two pieces of equipment
   o The setup can also be done through sending the appropriate key and algorithm from the Device to the remote control
- The pairing protocol may be a combination of a learning process from a "master" Remote-C and a key and/or a specific algorithm that is specific to the class of Devices (or specific to the Device).
   o The enrolling process of the slave remote-c follow the same approach as enrolling the master remote-c with the Device
- Using a Two way exchange of data between the Device and the Remote-C using clear or encrypted and/or signed by using cryptography or equivalent.
   o The dynamic exchange of the data is done at the boot of the Device, and optionally on a regular basis between the Device and the remote-C
- Using a one way (or two way) transmission between the Remote-C and the Device with a synchronization (e.g. time) and encrypted and/or signed command (that are not predictable for an external observer)
- Using a one way (or two ways) transmission between the Remote-C and the Device that is variable. A repetition of a previously sent command will not result in the expected action

### Brief description of the figures

This invention will be better understood thanks to the attached figure in which :
- figure 1 illustrates the remote control with a remote hub
- figure 2 illustrates a universal and a proprietary remote control
- figure 3 illustrates the remote control in connection with intermediate box
- figure 4 illustrates an encryption layer in the communication protocol
- figure 5 illustrates the case of multiple remote controls

### Detailed description

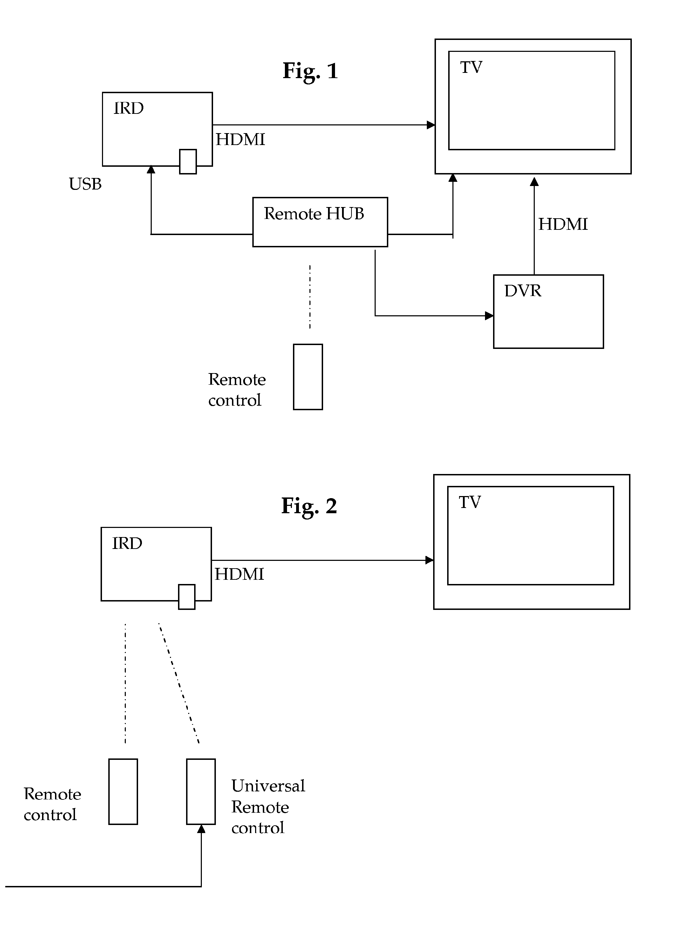

The figure 1 shows another way of using a universal remote control. The remote hub receives the commands from the universal remote thanks to an IR of RF receiver. It further comprises an IR emitter (or RF emitter) that passes the commands to the IRD or to another device such as a TV device. The role of the remote hub is to filter the commands and direct the commands to the proper device. With the pairing of the remote with the IRD, this use will no longer work since the remote hub will not know the proper keys, algorithm or protocol used to communicate with the IRD.

In the same manner, the figure 2 will ban the use of remote control in particular the one that are connected to Internet to receive commands from a management center. This is particularly useful when survey are carried out or rewarding policy for watching advertisements. We can now guarantee that only a true person passes the commands and answer the questions on the screen. As stated above, the genuine remote control contains a key of keys to encrypt the communication with the IRD. The key equivalent to the one of the remote is stored in the IRD to decrypt the commands. The pairing between these two devices is achieved when the key (or keys) used to encrypt or decrypt this communication is specific to the set remote/IRD. Instead of encryption, the protocol between the IRD and the remote can be specific to this pair of device. The meaning of a data received by the IRD is obtained thanks to a table look-up, The date received is the input of the table and the data pointed by the input is the output of the table as well as the correct command.

The figure 3 shows a case when an overlay is added on top of the image produced by the IRD by an intermediate device MM. This overly can add information and/or advertisement related to the current displayed program. This MM box can be connected to Internet and substitute the advertisements coming from the IRD by advertisements generated by the MM box supplier. In the same way, the paired remote control will forbid the use of a common remote control in this case.

With the presence of a security module attached to the IRD, the key, algorithms or protocol information can be stored within the security module. The remote control and the security module are then paired, i.e. the same key, algorithms or protocol being stored in the security module and the remote control.

The IRD receives the commands from the remote and passes them to the security module. In return, the security module converts these proprietary commands to a generic command common to all IRD that will be processed by the IRD.

The remote control can have an IR transmitter, a radio transmitter or both. The pairing can be activated with two or more IRD. According to a first embodiment, all IRD share the same secret. The commands sent by the remote are therefore comprehensible to all receivers. In another embodiment, the remote comprises a selector to select the target device and the remote load the data from its memory relative to this device. Each device can then have their own security layer (keys or protocol) sequentially loaded into the remote device. The initialization is carried out for each device in the same way as for one device as described above.

According to the invention, the device containing the key, algorithms or protocol is called the security device and can be the IRD device it self or the security module, depending on the various embodiments.

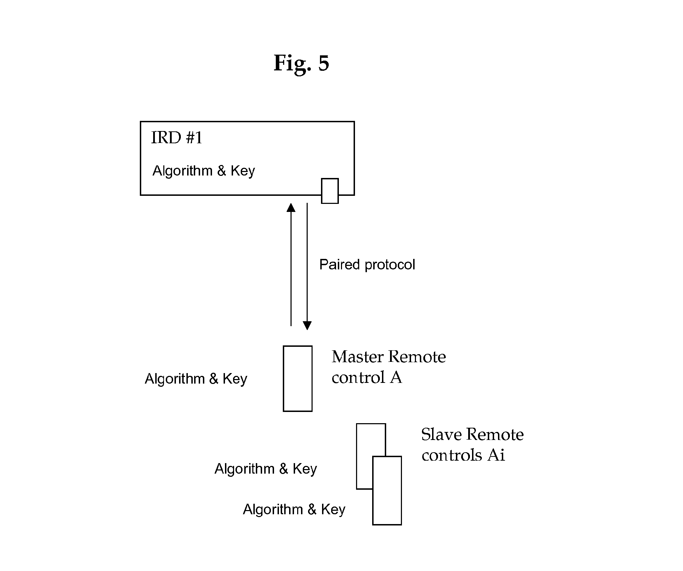

As illustrated in the figure 5, the security device can be paired with more than one remote control. In this case, the security module stores in its memory the specific key, algorithms or protocol for each remote control. In a preferred embodiment, the message sent by each remote control containing the data, comprises a header to indicate which remote control is currently sending this message. The security device can then load the correct key, algorithms or protocol in order to retrieve the user's command.

In the present invention, the remote control comprises a memory to store the various parameters (key, algorithms or protocol) pertaining to the proprietary communication with the receiver. In the case of a specific key, the remote control comprises encryption means and a memory to store the specific key. In the case of a specific protocol or algorithm, the remote control comprises a message builder which is parameterized according to the specific protocol or algorithm. This message builder receives the command from the keypad and encapsulates the command into a message, this message having a specific protocol or algorithm. The security device, the message received is processed by a message interpreter. This message interpreter is parameterized by the specific protocol or algorithm so that the command given by the user is retrieved.

During an initialization phase the remote can generate the specific key (or the parameter of the specific protocol or algorithm) and sent it to the security device. This key can be a symmetric key or a asymmetric key, in this second case, the remote control keeps the private key and the public key is sent to the security device. After this initialization step, the remote control and the security device, attached to the receiver, are paired.

According to another embodiment, the remote control is pre-initialized by the specific key, protocol or algorithm. This remote control further comprises an identification number. The user then send the identification number of its remote control to a management center together with the identification of its receiver (or security module). The management center prepares a message such as an EMM (Entitlement Management Message) containing the specific key, protocol or algorithm toward the receiver. When the receiver receives this message and loads these data into the security device, the remote control and the security device are then paired.

## Claims

1. System comprising a remote control and a security device, both sharing common key, algorithms or protocol specific to the pair formed by the remote control and the security device, the remote control comprising means to send wirelessly data to a receiver comprising the security device, said remote control being paired with the security device so that each data sent by the remote control toward the receiver is specific to the pair formed by the remote control and the security device.

2. System according to claim 1, wherein the remote control comprises encryption means and a memory to store a specific key, said data being encrypted by the encryption means by the specific key, the security device comprising decryption means and a key corresponding to the specific key to decrypt the data received.

3. System according to claim 1, wherein the remote control comprises a message builder according to a specific protocol, said data being encapsulated in a message according to the specific protocol, the security device comprising a message interpreter according to the specific protocol, so that to interpret the data received according to the specific protocol..

4. System according to any of the claims 1 to 3, wherein the security device is integrated into the receiver.

5. System according to any of the claims 1 to 3, wherein the security device is a security module removably connected with the receiver, said receiver comprising means to pass the data received from the remote control and means to received the clear data from the security module.
